**Europäisches Patentamt**

**European Patent Office**

**Office européen des brevets**

(19)

(11) Numéro de publication : **0 141 738**
**B1**

(12) ## FASCICULE DE BREVET EUROPÉEN

(45) Date de publication du fascicule du brevet :
25.03.87

(51) Int. Cl.⁴ : **F 16 L 55/10, F 16 J 13/02,**
**F 22 B 37/22**

(21) Numéro de dépôt : **84402177.4**

(22) Date de dépôt : **30.10.84**

(54) **Panneau d'obturation provisoire d'un passage à l'intérieur d'une enceinte accessible seulement par un orifice de plus petites dimensions.**

(30) Priorité : **02.11.83 FR 8317391**

(43) Date de publication de la demande :
**15.05.85 Bulletin 85/20**

(45) Mention de la délivrance du brevet :
**25.03.87 Bulletin 87/13**

(84) Etats contractants désignés :
**BE CH DE LI SE**

(56) Documents cités :
**FR-A- 2 340 489**
**FR-A- 2 415 515**

(73) Titulaire : **FRAMATOME ET CIE.**
**Tour Fiat 1, Place de la Coupole**
**F-92400 Courbevoie (FR)**

(72) Inventeur : **Coussau, Jean**
**1, rue Gossec**
**F-75012 Paris (FR)**
Inventeur : **Lavalerie, Claude**
**8, rue Xavier Bichat**
**F-95150 Taverny (FR)**

(74) Mandataire : **Bressand, Georges et al**
**c/o CABINET LAVOIX 2 Place d'Estienne d'Orves**
**F-75441 Paris Cedex 09 (FR)**

## Description

La présente invention concerne un panneau pour l'obturation étanche provisoire d'un passage à l'intérieur d'une enceinte accessible seulement par un orifice de dimensions inférieures à celles du passage à obturer. L'invention trouve une application particulièrement efficace pour l'obturation provisoire de l'orifice de raccordement, sur la boîte à eau d'un générateur de vapeur, d'une conduite du circuit primaire d'un réacteur nucléaire à eau sous pression.

Dans un réacteur nucléaire l'eau sous pression du circuit primaire circule entre le réacteur proprement dit où, au contact des éléments combustibles elle absorbe la chaleur résultant des réactions nucléaires, et un générateur de vapeur où cette chaleur est utilisée pour produire de la vapeur dirigée ensuite vers des groupes turboalternateurs si le réacteur est utilisé dans une centrale électrique nucléaire.

Le générateur de vapeur est généralement constitué par un faisceau de tubes en U montés sur une plaque tubulaire avec une boîte à eau hémisphérique partagée en deux par une cloison séparant deux chambres ; l'eau en provenance de la cuve du réacteur pénètre dans l'une des chambres, parcourt les tubes en U et est recueillie dans l'autre chambre d'où elle est pompée pour être renvoyée vers le réacteur. Les orifices de raccordement du circuit primaire sur les chambres de la boîte à eau sont de dimensions relativement importantes, de l'ordre par exemple d'un mètre de diamètre.

Il est périodiquement nécessaire d'accéder à l'intérieur des deux chambres de la boîte à eau, par exemple pour des opérations de vérification et d'entretien. Il est donc prévu un orifice d'accès, mais comme le fluide primaire est sous une pression importante on préfère donner à l'orifice d'accès une section aussi réduite que possible, de l'ordre de 400 mm, c'est-à-dire d'un diamètre normalement juste suffisant pour le passage d'un homme muni d'une combinaison de protection.

Pendant de telles opérations la circulation du fluide primaire est normalement arrêtée et les chambres du générateur de vapeur sont vides. Il est cependant nécessaire d'obturer les orifices par lesquels débouchent les canalisations de circulation du fluide primaire, d'abord pour des raisons psychologiques, l'opérateur pouvant craindre une chute dans cet orifice béant, et ensuite pour des raisons de sécurité pour empêcher une arrivée intempestive d'eau dans les chambres du fond du générateur.

La publication FR-A-2 340 489 du même déposant, décrit un mode de réalisation d'un tel panneau d'obturation permettant à la fois son introduction en éléments séparés par le trou d'homme d'accès de faible section, sa mise en place rapide sur une portée d'appui entourant l'orifice, et sa fixation rapide par vissage sur la portée d'appui. Un tel dispositif n'est cependant capable de supporter que des pressions hydrostatiques légèrement supérieures à un bar, correspondant à la hauteur d'eau de la piscine du réacteur.

De plus le souci continu d'améliorer les conditions de travail en milieu contaminé conduit à procéder à des opérations de décontamination. L'évolution des techniques chimiques de décontamination des constituants du circuit primaire des réacteurs à eau sous pression a permis d'effectuer ces opérations à l'aide d'un réactif fortement dilué dans l'eau et porté à une température d'environ 135 °C qui correspond à une pression saturante légèrement supérieure à 3 bars absolus du liquide contenu dans les chambres de la boîte à eau. En outre lorsque l'opération de décontamination doit être effectuée dans le faisceau tubulaire, il est nécessaire, pour éviter tout phénomène de vaporisation, de soumettre le liquide à une surpression d'environ 0,5 bar.

Lors des opérations de décontamination les obturateurs des orifices de circuit primaire sont alors destinés à isoler le générateur qui est en surpression d'environ 3,8 bars sur la face côté boîte à eau. Il faut encore ajouter un coefficient de tenue aux épreuves hydrauliques d'essais qui peuvent conduire à soumettre les obturateurs à des pressions effectives dépassant 5 bars.

Pour pouvoir satisfaire à de telles contraintes les dispositifs antérieurs tels que décrits par la publication FR-A-2 340 489 devraient comporter des éléments constitutifs dépassant largement le poids de 25 daN généralement admis pour des manutentions rapides.

La présente invention apporte donc une solution nouvelle au problème de la mise en place rapide d'un panneau d'obturation introduit dans une enceinte par un orifice de faibles dimensions, et ceci en limitant le poids des éléments à introduire séparément et successivement dans l'enceinte.

L'invention s'applique donc à un dispositif d'obturation étanche provisoire d'un passage à l'intérieur d'une enceinte accessible seulement par un orifice de dimensions inférieures à celles du passage à obturer, comportant au moins deux panneaux articulés entre eux par des charnières, le pourtour du passage à obturer comportant une portée d'appui munie d'alésages filetés. Selon l'invention, les charnières sont étanches et souples, chaque panneau comporte le long de ses bords articulés une série de pions d'accrochage et le dispositif est en outre constitué par :

un jeu de raidisseurs en nombre égal à celui des charnières du dispositif chaque raidisseur comportant deux lignes de lumières conjuguées avec les lignes de pions d'accrochage de deux panneaux contigus,

un cadre en au moins deux parties articulées et repliables l'une sur l'autre, reproduisant en position déployée le contour de la portée d'appui et comportant des moyens pour enserrer, avec interposition d'un joint, les extrémités des panneaux et des raidisseurs contre la portée d'appui, par vissage dans les alésages filetés.

La dimension et le nombre des panneaux sont déterminés pour permettre le passage à travers l'orifice d'accès de l'ensemble des panneaux repliés les uns sur les autres.

Selon une forme préférentielle de réalisation de l'invention les panneaux sont constitués en alliage de métal léger revêtus de fibre de carbone liée par de la résine, et les charnières souples sont réalisées en élastomère résistant à la corrosion.

L'invention sera mieux comprise en se référant à un mode de réalisation particulier représenté par les dessins annexés, ce mode de réalisation étant donné à titre d'exemple dans une application à l'obturation de l'orifice de raccordement du circuit primaire d'un réacteur nucléaire sur la boîte à eau d'un générateur de vapeur.

La figure 1 est une vue limitée de dessus, avec des coupes partielles d'un obturateur en place sur la portée d'appui de l'orifice.

La figure 2 est une coupe selon II-II de la figure 1.

La figure 3 montre à plus grande échelle le détail de l'assemblage d'un raidisseur sur l'obturateur, selon III-III de la figure 1.

La figure 4 montre le détail de la fixation de l'extrémité d'un raidisseur et d'un panneau sur la portée d'appui, selon IV-IV de la figure 1.

La figure 5 montre l'articulation du cadre de fixation selon V-V de la figure 1.

La figure 6 montre les panneaux en position repliée pour leur passage par l'orifice d'accès à l'enceinte.

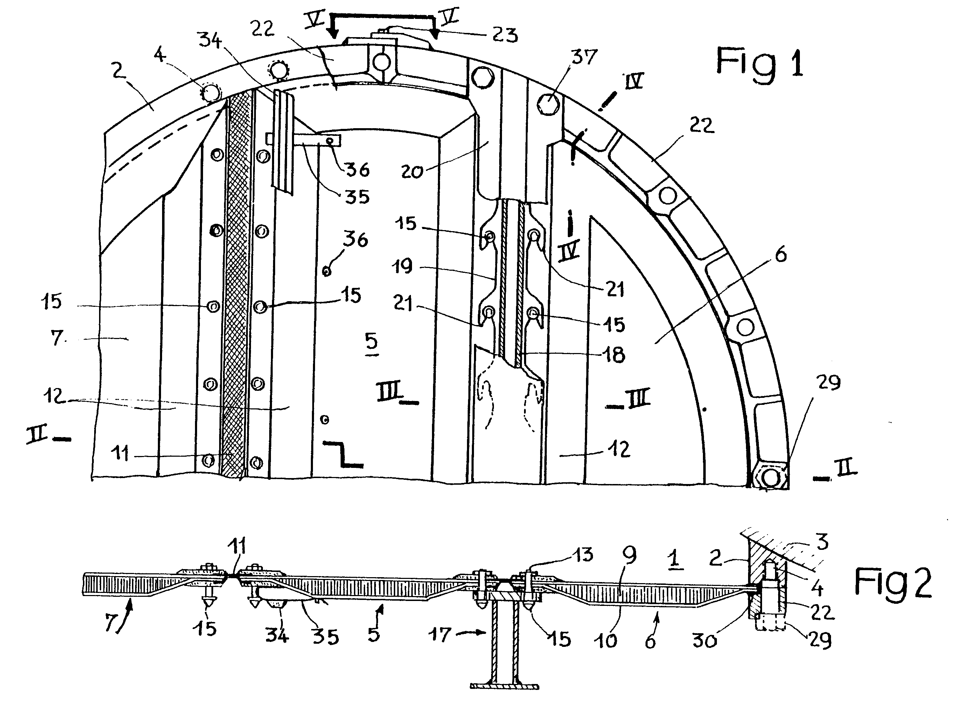

Si l'on se réfère tout d'abord à l'ensemble des figures 1, 2 et 3 on verra que le pourtour de l'orifice 1 à obturer est muni d'une portée annulaire d'appui 2 soudée sur la paroi 3 de l'enceinte ; la portée 2 comporte une série d'alésages filetés 4.

L'obturateur proprement dit est ici réalisé en trois panneaux 5, 6 et 7, constitués chacun par une structure 9 en nids d'abeilles en métal léger, elle-même revêtue d'une couche 10 de matériaux composites en fibres de carbone liées par une résine.

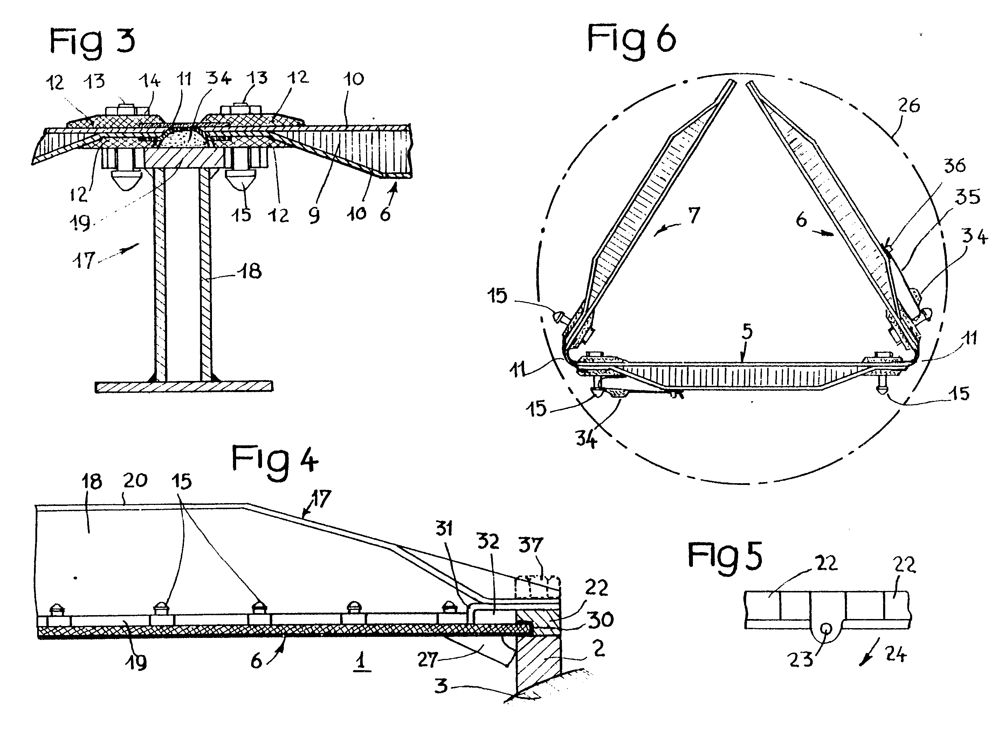

Les panneaux sont réunis entre eux par une bande 11 d'élastomère surmoulée sur les bordures parallèles des panneaux se faisant face, comme on le voit mieux sur la figure 3 à plus grande échelle. Les bandes 11 forment ainsi une charnière souple mais étanche entre les panneaux 5 et 6 d'une part et 6 et 7 d'autre part. La tenue mécanique des charnières est renforcée, sur chaque face des panneaux, par des bandes 12 formant couvre-joints, elles-mêmes en matériau composite fibres de carbone-résine, et fixées sur les panneaux par les vis 13 et les écrous 14. La tête des vis 13 est prolongée par des pions d'accrochage 15 en forme de champignon faisant saillie à intervalles réguliers en ligne le long des bords articulés des panneaux.

Chaque panneau 5, 6, 7 est calculé et dimensionné pour pouvoir, en soi, résister aux pressions d'utilisation ou d'épreuves. Pour assurer la rigidité en service des charnières souples 11 le dispositif comporte des poutres raidisseuses séparées 17, destinées à être mises en place sur les charnières. Les poutres 17 sont constituées de deux âmes en acier inoxydable 18 soudées sur deux semelles 19 et 20. La semelle 19 est découpée pour former des lumières en forme de crochets 21 qui, par un léger déplacement longitudinal, viennent s'agripper sous les têtes des pions d'accrochage 15, de façon à bloquer dans un même alignement plan les deux bords de deux panneaux contigus et de façon à reporter sur l'ensemble de la poutre 17 les efforts qui tendraient à faire plier l'articulation 11. On observera d'ailleurs que grâce aux têtes débordantes des pions 15 le report des efforts sur la poutre 17 s'exerce de la même façon lorsque la pression est appliquée sur l'une ou l'autre face des panneaux.

L'ensemble des dispositifs est complété par une couronne 22, ici circulaire, constituée en deux parties articulées selon un axe diamétral 23 (figure 5), de façon à permettre de replier chaque demi-couronne sur l'autre selon la flèche 24.

On procédera de la manière suivante pour la mise en place de l'obturateur sur la portée d'appui 2 de l'orifice à obturer. Les éléments constitutifs de l'obturateur sont d'abord introduits à l'intérieur de la chambre de la boîte à eau par le trou d'homme de diamètre réduit 26 (figure 6). Les poutres rectilignes 17 sont introduites telles quelles, tandis que la couronne 22 est introduite sans difficulté une fois repliée sur elle-même en un demi-anneau de faible section. Les trois panneaux articulés sont également repliés les uns sur les autres autour des charnières souples 11, et on voit sur la figure 6 que leur ensemble présente alors un encombrement suffisamment réduit pour passer sans difficulté par le trou d'homme 26.

L'opérateur ayant lui-même pénétré dans la boîte à eau, il lui suffit de déployer les panneaux et de les poser sur la portée 2, l'opération étant facilitée par des plots de centrage 27 solidaires des panneaux ; la rigidité propre des panneaux est suffisante pour que l'ensemble reste en place en l'absence de pression sur l'une ou l'autre face.

Après dépliage la couronne 22 peut alors être mise en place pour enserrer les bords des panneaux contre la poutre 2 au moyen de vis 29 engagées dans les alésages filetés 4. L'étanchéité de l'assemblage est assurée, après serrage définitif des vis 29, par des joints 30 disposés à la périphérie de l'ensemble des panneaux.

On vient ensuite accoster les poutres 17 dans l'axe des charnières 11, dans une position où les pions 15 échappent aux crochets 21. Ceci est possible grâce au décrochement du prolongement 31 de la semelle 19, ce qui ménage un jeu longitudinal 32 à chaque extrémité de la poutre 17. Avant d'appliquer la poutre 17 on aura rabattu contre la bande 11 le profilé en élastomère 34 destiné à assurer une portée de soutien à la bande charnière 11. Auparavant, et pour ne pas gêner la manutention des panneaux et leur pliage, le profilé 34 était maintenu écarté par des liens 35 boutonnés sur des attaches 36. Sur la figure 6 et sur la partie gauche des figures 1 et 2 on voit les profilés 34 en position d'attente ; sur la figure 3 et sur la partie droite de la figure 1 on voit au contraire les profilés 34 en position de soutien de la charnière souple 11.

Par une poussée longitudinale de la poutre 17 on vient ensuite agripper les deux rangées de pions 15 sur les deux rangées de crochets 21. Les poutres 17, ainsi solidarisées avec les panneaux avec blocage des articulations souples 11, peuvent alors être à leur tour fixées sur la couronne 22 et la portée 2 par des vis 37 qui assurent à la fois, comme on le voit sur la figure 4, l'appui des poutres 17 et le serrage du joint d'étanchéité 30.

L'invention n'est pas limitée à l'obturation d'orifices circulaires, elle s'applique de la même façon à l'obturation de passages de toute forme, et par exemple rectangulaire, chaque fois que cette obturation doit être réalisée à l'intérieur d'une enceinte accessible seulement par un orifice de dimensions inférieures à celles du passage à obturer. Le nombre et la dimension des panneaux seraient alors déterminés de façon à pouvoir introduire l'ensemble replié par l'orifice d'accès et bien entendu on disposera alors d'autant de poutres raidisseuses que d'articulations. De même le cadre de serrage pourra aussi comporter plusieurs articulations, permettant de le replier suffisamment pour permettre son passage par l'orifice d'accès.

De même les profilés d'appui 34 pourraient, en variante, être collés à demeure sous la semelle 19 des poutres raidisseuses 17.

### Revendications

1. Dispositif d'obturation étanche provisoire d'un passage (1) à l'intérieur d'une enceinte accessible seulement par un orifice de dimensions inférieures à celles du passage à obturer, comportant au moins deux panneaux (5, 6, 7) articulés entre eux par des charnières (11) le pourtour du passage à obturer comportant une portée d'appui (2) munie d'alésages filetés (4), caractérisé par le fait que les charnières sont étanches et souples, que chaque panneau comporte le long de ses bords articulés une série de pions d'accrochage (15) et qu'il est en outre constitué par :

un jeu de raidisseurs (17) en nombre égal à celui des charnières (11) du panneau, chaque raidisseur comportant deux lignes de lumières (21) conjuguées avec les lignes de pions d'accrochage (15) de deux panneaux contigus,

un cadre (22) en au moins deux parties articulées et repliables l'une sur l'autre, reproduisant en position déployée le contour de la portée d'appui (2) et comportant des moyens (29, 37) pour enserrer, avec interposition d'un joint (30), les extrémités des panneaux (5, 6, 7) et des raidisseurs (17) contre la portée d'appui (2), par vissage dans les alésages filetés (4).

2. Dispositif d'obturation selon la revendication 1, caractérisé par le fait que les panneaux (5, 6, 7) sont constitués en alliage de métal léger revêtu de fibres de carbone liées par de la résine.

3. Dispositif d'obturation selon la revendication 1, caractérisé par le fait que les charnières souples (11) sont réalisées en élastomère résistant à la corrosion.

4. Dispositif d'obturation selon l'une quelconque des revendications précédentes, caractérisé par le fait qu'il comporte, associé à chaque charnière (11), un profilé d'appui (34) interposé entre la charnière souple (11) et le raidisseur (17) correspondant.

### Claims

1. Temporary fluid-tight obturation device for a passage (1) into a vessel accessible only through an aperture of dimensions less than those of the passage to be obturated, comprising at least two panels (5, 6, 7) articulated together by hinges (11), the periphery of the passage to be closed comprising a support collar (2) provided with threaded holes (4), characterized by the fact that the hinges are fluid-tight and flexible, that each panel comprises along its articulated edges a series of latching pins (15), and that it is further constituted by :

a set of stiffeners (17) equal in number to that of the hinges (11) of the panel, each stiffener comprising two lines of holes (21) conjugate with the lines of the latching pins (15) of two contiguous panels,

a frame (22) in at least two parts articulated and foldable on one another, reproducing in folded position the contour of the support collar (2) and comprising means (29, 37) to grip, with the interposition of a seal (30) the ends of the panel (5, 6, 7) and of the stiffeners (17) against the support collar (2), by screwing into the threaded holes (4).

2. Obturation device according to Claim 1, wherein the panels (5, 6, 7) are constituted of light metallic alloy coated with carbon fibers bonded by resin.

3. Obturation device according to Claim 1, wherein the flexible hinges (11) are formed of corrosion-resistant elastomer.

4. Obturation device according to any preceding claim, comprising, associated with each hinge (11), a supporting sectional element (34) interposed between the flexible hinge (11) and the corresponding stiffener (17).

### Patentansprüche

1. Provisorische Abdeckvorrichtung für eine Öffnung (1) im Inneren eines Behälters, die nur über eine Öffnung geringerer Ausmaße als die der zu verschließenden Öffnung zugänglich ist, mit mindestens zwei Platten (5, 6, 7), die untereinander mittels Scharnieren (11) gelenkig verbunden sind, wobei der Rand der zu verschließenden Öffnung eine mit Gewindebohrungen (4) versehene Auflagefläche (2) aufweist, dadurch gekennzeichnet, daß die Scharniere dicht und nachgiebig sind, jede Platte entlang des jeweiligen gelenkig verbundenen Rands eine Reihe von Klammerstiften (15) aufweist, und dadurch, daß sie ferner aufweist :

Versteifungen (17) in gleicher Anzahl wie die der Scharniere (11) der Platten, wobei jede Versteifung zwei Öffnungsreihen (21) aufweist, die entsprechend der Reihen der Klemmstifte (15) zwei als sich berührender Platten angeordnet sind und

einen Rahmen (22) aus mindestens zwei gelenkig miteinander verbundenen Teilen, die aufeinander klappbar sind und in aufgeklappter Position den Rand der Auflageflächen (2) wiedergeben und Mittel (29, 37) aufweisen, um unter Zwischenschaltung eines Verbindungsstücks (30) die Enden der Platten (5, 6, 7) und die Versteifung (17) gegen die Auflagefläche (12) mittels Verschraubung in den Gewindebohrungen (4) zu spannen.

2. Provisorische Abdeckvorrichtung nach Anspruch 1, dadurch gekennzeichnet, daß die Platten (5, 6, 7) aus einer Leichtmetalllegierung bestehen, und mit mit Harz verbundenen Kohlenstofffasern bedeckt sind.

3. Provisorische Abdeckvorrichtung nach Anspruch 1, dadurch gekennzeichnet, daß die biegsamen Scharniere (11) aus einem korrisionsbeständigen Elastomer gefertigt sind.

4. Provisorische Abdeckvorrichtung nach einem der vorstehenden Ansprüche, gekennzeichnet durch, jeweils mit jedem Scharnier (11) verbundene Auflageprofile (34), die zwischen den biegsamen Scharnieren (11) und den entsprechenden Versteifungen (17) angeordnet sind.

Fig 1

Fig 2

0 141 738

Fig 3

Fig 6

Fig 4

Fig 5

0 141 738